(19) Europäisches Patentamt
European Patent Office
Office européen des brevets

(11)  **EP 2 278 217 B1**

(12)  **FASCICULE DE BREVET EUROPEEN**

(45) Date de publication et mention
de la délivrance du brevet:
**06.07.2016   Bulletin 2016/27**

(51) Int Cl.:
*F21V 13/04* *(2006.01)*          *F21S 8/12* *(2006.01)*
*F21Y 115/10* *(2016.01)*          *F21W 101/10* *(2006.01)*

(21) Numéro de dépôt: **10169418.0**

(22) Date de dépôt: **13.07.2010**

(54) **Module d'éclairage pour projecteur de véhicule automobile, et projecteur équipé d'au moins un tel module**

Beleuchtungsmodul für Fahrzeugscheinwerfer, und mit wenigstens einem solchen Modul ausgerüsteter Scheinwerfer

Lighting module for headlamp for motor vehicle, and headlamp equipped with at least one of such a module

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **21.07.2009   FR 0955061**

(43) Date de publication de la demande:
**26.01.2011   Bulletin 2011/04**

(60) Demande divisionnaire:
**16167522.8**

(73) Titulaire: **Valeo Vision**
**93012 Bobigny (FR)**

(72) Inventeurs:
• **Albou, Pierre**
**75013, PARIS (FR)**
• **Sanchez, Vanesa**
**75011, PARIS (FR)**

(56) Documents cités:
**EP-A1- 1 870 633     EP-A1- 1 881 264**
**EP-A1- 2 019 256     EP-A1- 2 169 295**
**EP-A2- 1 452 795     FR-A- 1 306 770**
**FR-A1- 2 931 536     US-A1- 2007 201 241**

**Description**

L'invention est relative à un module d'éclairage pour projecteur de véhicule automobile, du genre de ceux qui comportent au moins deux émetteurs lumineux espacés et un système optique pour former un faisceau lumineux.

Les émetteurs lumineux sont de préférence constitués de diodes électroluminescentes comprenant un ou plusieurs éléments semi-conducteurs.

EP 1 487 025 montre un module avec plusieurs sources lumineuses composées de diodes électroluminescentes, également appelées LEDs, donnant des faisceaux superposés de largeurs différentes dont le seul bord net est une coupure supérieure obtenue par imagerie d'un cache. Les bords verticaux du faisceau ne sont pas définis de manière nette. L'extinction d'une LED ne permet pas d'obtenir une bande verticale non éclairée en une position déterminée.

EP 1 780 462 au nom de la Société déposante concerne un projecteur d'éclairage comportant une pluralité de sources lumineuses, chacune émettant un faisceau lumineux partiel, la superposition des faisceaux lumineux partiels donnant le faisceau d'éclairage. Chaque source lumineuse est modulable individuellement pour contrôler le flux émis dans une direction prédéterminée. Il est prévu de créer des zones exemptes de rayons lumineux en fonction d'informations recueillies sur les conditions de circulation du véhicule. Un tel projecteur donne des résultats satisfaisants, mais la netteté des coupures verticales entre une zone non éclairée et une zone éclairée demande à être améliorée. La hauteur et la largeur des bandes lumineuses ne sont pas obtenues aisément et nécessitent généralement des sources lumineuses différentes.

Le document EP 1881264 montre le préambule de la revendication 1.

L'invention a pour but, surtout, de fournir un module donnant des bandes verticales d'éclairage dont les bords verticaux sont nets et dont la hauteur et la largeur peuvent être modifiées.

L'objet de l'invention est un module d'éclairage pour projecteur de véhicule automobile, comprenant au moins deux émetteurs lumineux, et un système optique pour former un faisceau, caractérisé en ce que :

- les émetteurs lumineux sont espacés et sensiblement rectangulaires,
- le système optique comporte plusieurs lentilles disposées de manière à ce que chaque émetteur lumineux soit associé à au moins une lentille différente,
- un miroir est disposé en arrière de chaque lentille pour renvoyer les rayons lumineux provenant de l'émetteur associé vers la lentille, et
- les lentilles et les miroirs sont calculés pour produire avec chaque émetteur lumineux associé une bande lumineuse à bords verticaux nets, de hauteur et de largeur déterminées.

Le dispositif selon la présente invention permet ainsi, selon les conditions de circulation, de générer un faisceau lumineux en éteignant ou en allumant seulement certaines bandes lumineuses, tout en ayant une netteté des coupures verticales entre une zone non éclairée et une zone éclairée.

Avantageusement, chaque émetteur lumineux peut être décalé transversalement par rapport à l'axe optique de la lentille associée. Ceci permet d'obtenir un faisceau plus homogène sur la route éclairée par le dispositif selon la présente invention.

Avantageusement, ladite bande lumineuse peut présenter un éclairement homogène entre les bords verticaux. Ceci permet d'associer les bandes pour former un faisceau global homogène, notamment en répartissant les bandes transversalement.

Avantageusement, le maximum d'intensité lumineuse de ladite bande lumineuse est décentré par rapport à l'ensemble de ladite bande lumineuse. Cela permet de positionner la portée de l'éclairage dans une direction donnée. Par exemple, il est avantageux que le maximum d'intensité soit décentré vers le bas, conférant ainsi une portée plus proche de l'horizon au faisceau obtenu, lorsque le dispositif est monté dans les conditions d'éclairage d'une route.

Par sensiblement rectangulaire, on entend un émetteur lumineux dont la surface émettrice présente trois côtés consécutifs formant entre eux un angle sensiblement droit. Le quatrième côté peut ne pas former d'angle droit et être non parallèle avec le côté qui lui est opposé. Il peut également former un angle droit avec les côtés consécutifs. Ce quatrième côté étant préférentiellement le bord arrière de l'émetteur, lorsque le faisceau émis par le module d'éclairage est un faisceau complémentaire d'un faisceau code pour former un faisceau route. Les émetteurs sensiblement carrés sont inclus dans la définition des émetteurs sensiblement rectangulaires. Ceci permet de réaliser plus facilement les bandes lumineuses selon la présente invention.

Par module d'éclairage on entend, dans la présente demande, un ensemble se sources lumineuses et de système optiques générant un faisceau lumineux avec une fonction déterminée, par exemple une fonction code, une fonction de feu complémentaire destinée à compléter une fonction d'éclairage code pour former un éclairage de type route. Le faisceau peut être lui-même composé de plusieurs faisceaux élémentaires.

De préférence, les lentilles et les miroirs sont calculés pour donner un troisième bord net, à savoir le bord inférieur horizontal de chaque bande, tandis que le bord supérieur est plus flou. Le bord supérieur flou permet de se rapprocher d'un faisceau route traditionnel, obtenu par exemple avec des sources lumineuses halogènes.

Avantageusement, le module d'éclairage selon l'invention produit un faisceau dans lequel les bords verticaux de bandes provenant d'émetteurs lumineux voisins sont juxtaposés.

Avantageusement, les lentilles et les miroirs sont calculés pour produire une anamorphose de la bande lumineuse obtenue avec chaque émetteur lumineux. En particulier, un ensemble lentille et miroir, associé à un émetteur lumineux est calculé pour dilater verticalement la bande lumineuse produite. Cette variante de réalisation permet d'obtenir une bande lumineuse avec une intensité lumineuse décentrée verticalement, c'est-à-dire écartée du centre de cette bande lumineuse. Le maximum d'intensité est positionné de préférence vers le bas de la bande lumineuse.

De préférence une cloison opaque est prévue entre deux ensembles adjacents de miroir, lentille et émetteur lumineux. Ceci permet d'éviter la création de faisceaux parasites, la cloison absorbant les rayons directs ou réfléchis d'un ensemble vers un autre. Selon une variante de réalisation, un cache de lumière directe visant à bloquer les rayons émis par l'émetteur et atteignant directement la lentille sans impacter le miroir est également prévu au sein de chaque ensemble miroir, lentille et émetteur.

L'invention permet d'obtenir pour chaque bande lumineuse provenant d'un émetteur lumineux sensiblement rectangulaire trois bords nets, préférentiellement deux bords verticaux et un bord inférieur, et un bord supérieur plus flou, avec un maximum d'intensité lumineuse non centré. Les bords sont nets indifféremment pour les bandes centrales et latérales.

Ce résultat ne pourrait être obtenu en imageant des émetteurs lumineux rectangulaires espacés associés chacun à un unique système de projection commun à tous ces émetteurs lumineux, car :

- ou bien l'image serait nette de sorte que les séparations verticales seraient imagées nettes avec des bandes non jointives, et les quatre bords seraient nets ;
- ou bien tout serait flou, et tous les bords seraient flous.

Dans tous les cas, en imageant les émetteurs lumineux, les bandes latérales seraient plus floues que les bandes centrales, en raison des aberrations de champ qu'il serait très coûteux d'abaisser en termes de complexité et de taille du système de projection.

Préférentiellement, l'émetteur lumineux est un élément semi-conducteur d'une diode électroluminescente, ou DEL (encore appelée LED en anglais), cet élément semi-conducteur émettant de la lumière lorsqu'il est mis sous tension. Cet élément semi-conducteur est appelé puce.

Selon une variante de réalisation, l'émetteur lumineux peut être formé par une matrice de plusieurs puces alignées suivant au moins une direction, les puces voisines étant séparées par des zones n'émettant pas de lumière.

Selon un exemple de réalisation, la matrice de puce présente une forme rectangulaire avec des puces alignées suivant la grande direction de la forme rectangulaire. Selon un exemple de réalisation, pour les ensembles lentille, réflecteur et émetteur lumineux associés émettant un faisceau lumineux élémentaire proche du centre du faisceau lumineux du module d'éclairage complet, cette grande direction est alignée avec l'axe optique de la lentille associée correspondante. En revanche, pour les faisceaux élémentaires situés transversalement de part et d'autre du faisceau lumineux, cette grande direction est orthogonale à l'axe optique de la lentille associée correspondante.

De préférence, le miroir est cylindrique avec des génératrices orthogonales à l'axe optique de la lentille associée et généralement horizontales. Dans un plan vertical passant par cet axe optique, le miroir est stigmatique entre l'extrémité avant de l'émetteur lumineux associé et un premier point F de cet axe optique, tandis que dans un plan horizontal, passant par cet axe optique, il est stigmatique entre l'extrémité avant de l'émetteur lumineux et un deuxième point F2 de cet axe optique.

Avantageusement, le miroir est calculé pour transformer le bord arrière de l'émetteur lumineux en le bord éloigné de l'axe optique de l'image de l'émetteur par le miroir, ce bord éloigné étant le bord supérieur flou, l'axe optique étant celui de la lentille associée.

Selon un exemple préférentiel de réalisation, le miroir a une portion inférieure ondulée, l'ondulation ayant une amplitude inférieure à 1 millimètre, préférentiellement inférieure à 0.3 millimètre, et une période au moins supérieure à 10 fois cette amplitude, la hauteur de la portion ondulée étant d'au plus 25 pour cent de la hauteur totale de ce miroir. Par hauteur, on entend la distance mesurée sur l'élément considéré selon un axe vertical.

Selon un mode de réalisation, la lentille associée présente une face de sortie convexe de révolution et une face d'entrée cylindrique à génératrices verticales. Dans la présente demande, l'expression lentille associée désigne la lentille d'un ensemble émetteur lumineux/réflecteur/lentille.

De préférence :

- la lentille associée, en coupe par un plan vertical passant par l'axe optique, est stigmatique entre le premier point F et l'infini,
- cette lentille, en coupe par un plan horizontal passant par l'axe optique, est stigmatique entre le deuxième point F2 et l'infini.

L'invention est également relative à un projecteur route à faisceau sélectif, caractérisé en ce qu'il comprend un système optique principal à faisceau à ligne de coupure, et au moins un module tel que défini précédemment produisant des bandes verticales juxtaposées au-dessus de la ligne de coupure pour former un faisceau route. Dans le cas où chaque bande lumineuse provenant d'un émetteur rectangulaire présente trois bords nets, à savoir deux bords verticaux et un bord inférieur, cette superposition du faisceau à coupure et du faisceau composé de bandes pour former le faisceau route évite d'ajouter trop de lumière au faisceau à coupure lors de l'allumage du faisceau composé de bandes.

La juxtaposition des bandes verticales obtenue en faisant coïncider les bords verticaux nets adjacents permet de supprimer des lignes sombres verticales, particulièrement gênantes, entre les bandes.

Avantageusement, le projecteur comprend un module avec plusieurs ensembles lentille-miroir-émetteur donnant des bandes de hauteurs et largeurs différentes, la hauteur des bandes diminuant lorsque les bandes s'écartent de l'axe optique pour reproduire le volume d'un faisceau route classique, tandis que la largeur des bandes augmente lorsqu'elles s'écartent de l'axe optique. Ceci permet de minimiser le nombre de bandes nécessaire sans affecter l'aspect du faisceau route en situation de conduite. L'analyse du besoin pour la fonction faisceau route sélectif, ou SHB (pour Selective High Beam) montre en effet que la discrétisation de la taille des bandes lumineuses dans le faisceau n'a pas à être constante angulairement et qu'il est souhaitable d'avoir des bandes plus larges lorsque l'écart angulaire avec l'axe longitudinal du véhicule augmente. Ceci permet non seulement de diminuer le nombre de LEDs et de bandes lumineuses élémentaires mais également de diminuer l'intensité lorsque l'écart angulaire avec l'axe longitudinal du véhicule augmente, de sorte à reproduire le profil d'intensité d'un faisceau route classique.

Avantageusement, cette variation de hauteur et de largeur des bandes peut être obtenue avec des émetteurs lumineux identiques, moyennant le changement des paramètres optiques de conception des différents ensembles émetteur lumineux-réflecteur-lentille associés. Il s'ensuit une réduction de coût et une simplicité de réalisation du dispositif selon la présente invention.

L'invention consiste, mises à part les dispositions exposées ci-dessus, en un certain nombre d'autres dispositions dont il sera plus explicitement question ci-après à propos d'exemples de réalisations décrits avec référence aux dessins annexés, mais qui ne sont nullement limitatifs. Sur ces dessins :

Fig.1 représente l'image d'une diode électroluminescente composée de cinq puces carrées alignées verticalement, cette image étant obtenue avec un système classique de projection imageant.

Fig.2 est un diagramme illustrant, pour l'image de Fig.1, la répartition de l'énergie lumineuse, portée en ordonnée, selon la position verticale dans la bande portée en abscisse.

Fig.3 est une coupe verticale schématique d'un ensemble lentille-miroir-émetteur d'un module d'éclairage selon l'invention.

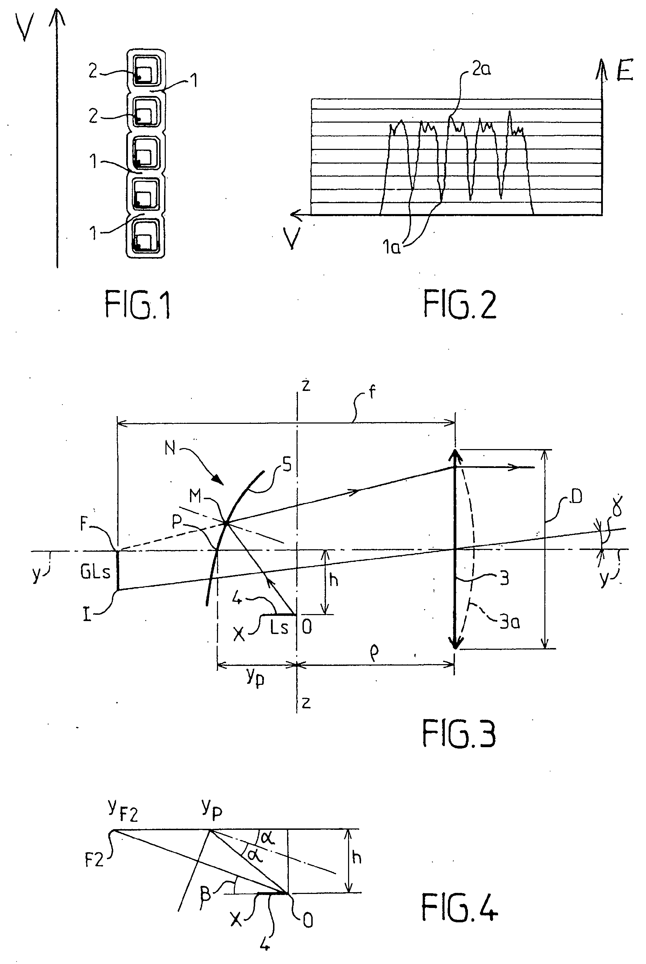

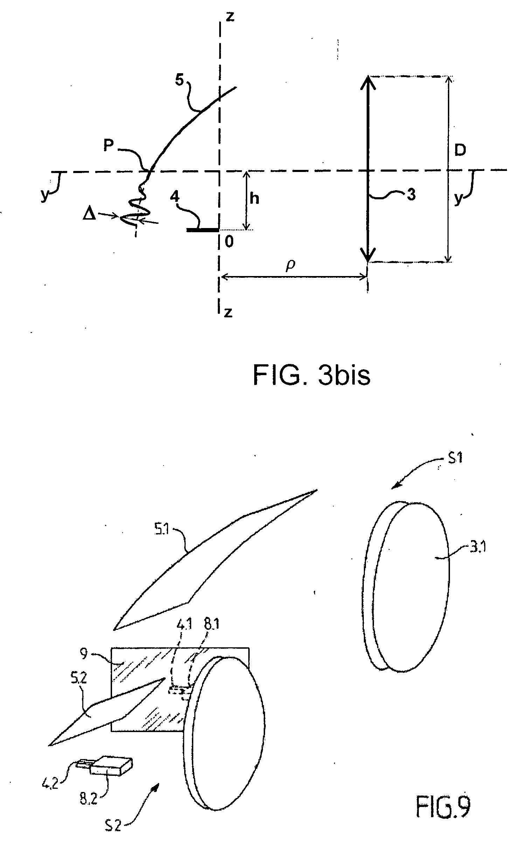

Fig.3bis est une coupe verticale schématique d'un ensemble lentille-miroir-émetteur d'un module d'éclairage selon une variante de l'invention.

Fig.4 est un schéma illustrant, en coupe verticale partielle, la détermination du foyer F2 de la coupe horizontale de l'ensemble de Fig.1.

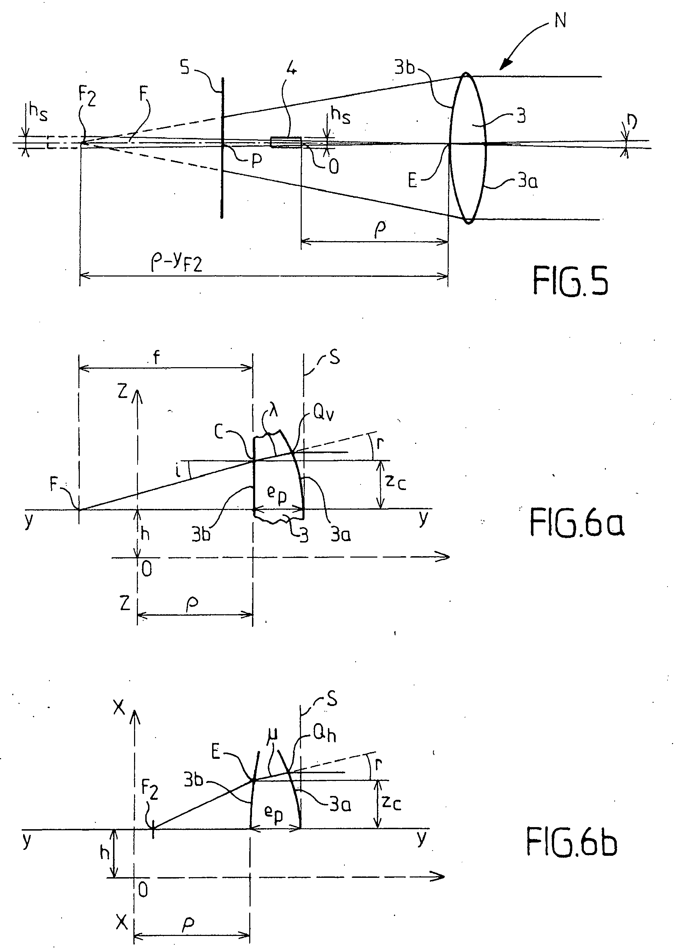

Fig.5 est une coupe schématique horizontale de l'ensemble de Fig. 3.

Fig. 6a est un schéma en coupe verticale axiale d'une partie de la lentille.

Fig. 6b est un schéma en coupe horizontale axiale d'une partie de la lentille.

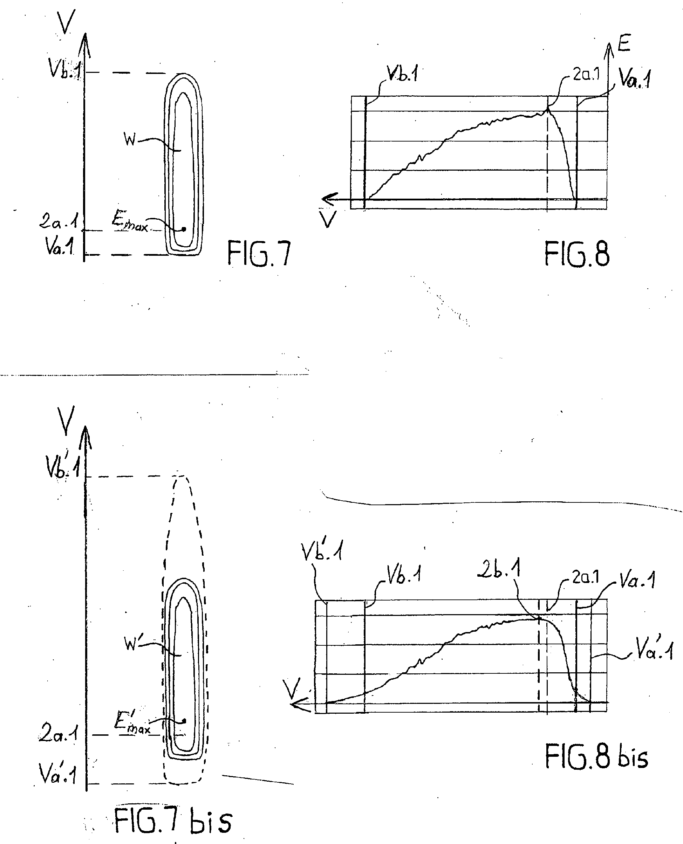

Fig.7 est un schéma illustrant la bande lumineuse verticale obtenue à partir d'un émetteur rectangulaire avec un ensemble selon Fig.3.

Fig.8 est un diagramme de la répartition de l'énergie lumineuse dans la bande de Fig.7, avec en ordonnée l'énergie lumineuse en un point et, en abscisse, la hauteur du point dans la bande, la hauteur croissant de la droite vers la gauche.

Fig.7bis est un schéma illustrant la bande lumineuse verticale obtenue à partir d'un émetteur rectangulaire avec un ensemble selon Fig.3bis.

Fig.8bis est un diagramme de la répartition de l'énergie lumineuse dans la bande de Fig.7bis, avec en ordonnée l'énergie lumineuse en un point et, en abscisse, la hauteur du point dans la bande, la hauteur croissant de la droite vers la gauche.

Fig.9 est un schéma simplifié en perspective d'un module avec deux ensembles juxtaposés de miroir-lentille-émetteur.

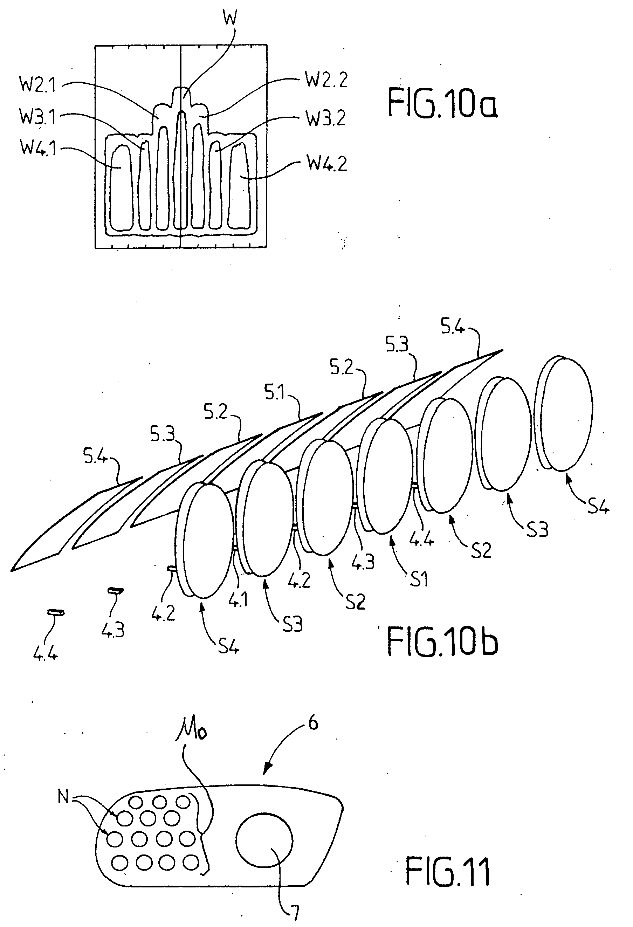

Fig.10a est un schéma illustrant sept bandes lumineuses juxtaposées de hauteur et de largeur différentes obtenues avec un module comportant sept ensembles miroir-lentille-émetteur ayant des émetteurs lumineux identiques.

Fig.10b est un schéma simplifié en perspective du module avec sept ensembles de miroir-lentille-émetteur permettant d'obtenir les bandes illustrées sur Fig.10a.

Fig.11 est une vue de face simplifiée d'un projecteur équipé de d'un module d'éclairage selon l'invention et

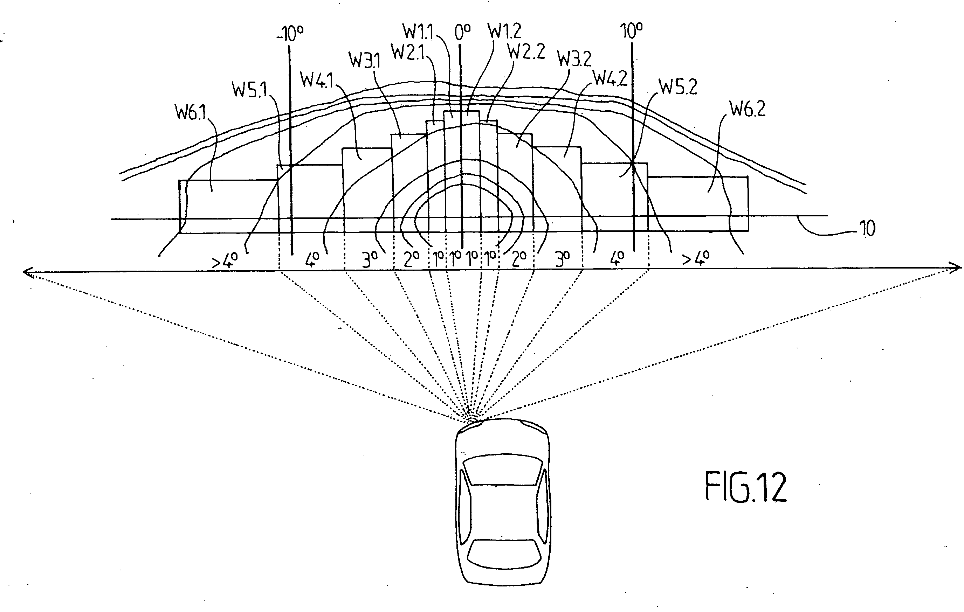

Fig.12 est une vue schématique du faisceau obtenu dans un plan vertical à l'aide d'un projecteur équipé d'un module d'éclairage selon l'invention.

L'invention permet de fournir un module qui permet d'obtenir, avec une source lumineuse formée par au moins deux émetteurs lumineux rectangulaires espacés, des bandes lumineuses ayant des bords verticaux nets et juxtaposés de sorte que les séparations verticales entre les émetteurs ont disparu. De plus, il est souhaitable que l'éclairement entre les bords verticaux soit homogène et que la zone d'énergie maximale se trouve dans la partie basse des bandes lumineuses, et que le bord inférieur horizontal soit net.

Dans une conception optimisée, les bandes à éclairer ont des tailles (à la fois verticales et horizontales) différentes les unes des autres.

Les systèmes de projection classiques nécessitent, pour créer des bandes d'aspects différents, non seulement d'avoir plusieurs focales mais aussi des sources individuelles de tailles adaptées, différentes les unes des autres. En effet, adapter les focales ne permet pas de changer le rapport d'aspect de la bande (rapport hauteur/largeur), alors qu'un tel changement est souhaité selon l'invention, sans avoir à changer de type d'émetteur de lumière. Dans le cas d'une source matricielle unique, c'est-à-dire un émetteur lumineux comprenant plusieurs puces, seule est possible la solution consistant à modifier la taille de la source. Toutefois une telle source à émetteurs lumineux de tailles irrégulières (totalement spécialisée et ne pouvant pas facilement trouver d'autres applications) n'est pas aisément disponible : il est donc alors indispensable d'avoir une source avec de nombreux émetteurs lumineux de petite taille (en matrice) pour pouvoir approximer la forme d'émetteur voulue en allumant plusieurs émetteurs lumineux pour chaque bande. Certains émetteurs lumineux sont alors inutiles, ou l'approximation de la forme de faisceau souhaitée est grossière ; en pratique, c'est ce dernier cas que l'on rencontre actuellement avec des sources ayant quelques dizaines d'émetteurs seulement.

Dans le cas de systèmes de projection multiples, il est possible d'utiliser différentes focales. Toutefois un système de projection simple ne permet pas de modifier le rapport d'aspect des bandes créées, un petit nombre seulement de rapports étant possibles en fonction des LEDs disponibles (qui doivent être choisies dans une famille précise, pour des raisons d'homogénéité de couleur notamment). Il n'est pas possible d'utiliser la même LED pour tous les appareils, ce qui serait économiquement souhaitable.

Des systèmes optiques élaborés peuvent être indispensables pour obtenir une bonne netteté et forme de l'image de l'émetteur (supposé rectangulaire ou carré) alors que seuls les bords latéraux doivent être très nets, ainsi de préférence que le bord inférieur.

Fig. 3 illustre schématiquement en coupe verticale axiale une partie d'un ensemble N lentille-réflecteur-émetteur lumineux qui, selon l'invention, répond aux exigences précédentes.

Selon cette invention, le bord supérieur peut être flou, ce qui est souhaitable pour se rapprocher d'un faisceau route traditionnel. Il est enfin souhaitable de placer le maximum d'intensité vers le bas des faisceaux élémentaires, alors qu'un système de projection imageant le placera vers leurs centres.

Sur cette Fig.3, comme éléments du module d'éclairage, seul un ensemble N générant un faisceau élémentaire a été représenté. Il comprend une lentille 3 associée à un émetteur rectangulaire 4. L'émetteur 4 est décalé transversalement d'une distance h par rapport à l'axe optique y-y de la lentille.

Un miroir ou réflecteur 5, représenté concave mais qui peut être différent, notamment plan ou convexe, est disposé en arrière de la lentille (selon le sens de projection de la lumière) pour renvoyer les rayons lumineux provenant de l'émetteur 4 vers la lentille 3.

La lentille 3 et le miroir 5 sont calculés, comme expliqué plus en détail ci-après, pour produire une bande lumineuse à bords verticaux nets de hauteur et largeur déterminées avec un maximum d'intensité lumineuse décentré, décalé vers le bas. De préférence le bord inférieur est également net, et le bord supérieur est plus flou. En outre, l'éclairement est homogène entre les bords verticaux.

L'émetteur 4 rectangulaire est disposé parallèlement à l'axe y-y de la lentille 3, avec une dimension $L_s$ parallèle à y-y. Le bord avant de l'émetteur 4 est situé à une distance $\rho$ en arrière de la lentille 3. Le foyer F de la section verticale de la lentille 3 est situé à une distance f en arrière de la lentille.

$\rho$ et h sont des paramètres de conception, f est une grandeur intermédiaire, qu'on considérera connue dans un premier temps (f correspond à la focale, dans cette construction, de l'hypothétique lentille stigmatique de diamètre D et de foyer F). Dans le cas d'un émetteur rectangulaire à plusieurs puces alignées, d'un ensemble N générant une bande lumineuse, ou faisceau élémentaire à proximité du centre du faisceau généré par le module d'éclairage, pour l'obtention de bandes verticales, $L_s$ correspond généralement à la grande dimension de l'émetteur. Lorsque le module d'éclairage est monté sur le véhicule, ce faisceau élémentaire là correspond à celui situé à proximité de l'axe longitudinal du véhicule.

La section du miroir concave 5 par le plan vertical passant par l'axe optique y-y de la lentille 3 est tracée sur Fig.3. On désigne par P l'intersection de la section du miroir 5 avec l'axe optique y-y.

Dans un premier temps, on considère que P est un point quelconque connu. Un point O, situé sur le bord avant de l'émetteur lumineux 4, est l'origine du repère de coordonnées. Les coordonnées d'un point dans le plan de Fig.3 sont exprimées à partir du point O, pour les abscisses suivant un axe parallèle à y-y, et pour les ordonnées suivant un axe z-z perpendiculaire à y-y.

On construit la coupe, dans le plan de Fig.3 d'une surface de réflecteur 5 passant par P, stigmatique entre O et F (F est une image virtuelle de O). Les coordonnées des points P et F sont données ci-après :

$$P \begin{pmatrix} y_P \\ h \end{pmatrix}$$

$$F \begin{pmatrix} \rho - f \\ h \end{pmatrix}$$

On exprime que le chemin optique est constant et égal à K entre O et F :

$$K = OP - PF = \sqrt{h^2 + y_P^2} - f - y_P + \rho \quad \text{équation (A)}$$

M est un point courant de coordonnées y, z de la section du réflecteur 5 dans le plan de Fig.3.

$$M \begin{bmatrix} y \\ z \end{bmatrix}$$

$$OM - MF = K$$

$$\sqrt{y^2 + z^2} = K + \sqrt{(y-\rho+f)^2 + (z-h)^2}$$

$$\Rightarrow y^2 + z^2 = K^2 + (y-\rho+f)^2 + (z-h)^2 + 2K\sqrt{(y-\rho+f)^2 + (z-h)^2}$$

$$\Rightarrow -K^2 - 2y(f-\rho) - (f-\rho)^2 + 2zh - h^2 = 2K\sqrt{(y-\rho+f)^2 + (z-h)^2}$$

en posant K' = K² + h² + (f- ρ)² on obtient alors :

$$K'^2 + 4y^2(f-\rho)^2 + 4z^2h^2 + 4y(f-\rho)(K'-2zh) - 4K'zh = 4K^2[y^2 + 2y(f-\rho) + (f-\rho)^2 + z^2 - 2zh + h^2]$$

$$\Rightarrow y^2\left\{(f-\rho)^2 - K^2\right\} + y\left\{(f-\rho)(K'-2zh-2K^2)\right\} + z^2(h^2-K^2) + 2zh(2K^2-K') + K'^2/4 - K^2[(f-\rho)^2 + h^2)] = 0$$

C'est l'équation de la section droite du réflecteur 5 dans le plan de Fig.3, y (z) correspondant à une seule solution répondant à l'équation (A).

On détermine les extrémités utiles du réflecteur dans le plan de Fig.3 par

$$\frac{y(z) + f - \rho}{h - z} = \frac{2f}{D} \quad \text{(limite inférieure)}$$

$$\frac{y(z) + f \cdot \rho}{z - h} = \frac{D}{2f} \quad \text{(limite supérieure)}$$

Il s'agit d'équations en z.

En outre, on peut calculer la position dans le plan focal de la lentille de l'image I de l'extrémité X (la plus éloignée de la lentille 3) de l'émetteur par le réflecteur en P ou, inversement trouver P pour que cette image soit telle que le pseudo-grandissement G :

$$G = \frac{\overline{FI}}{L_s}$$

ait une valeur donnée :

Soit $n_p$ la normale au réflecteur 5 en P :

$$\vec{n}_p \text{ colinéaire à } \frac{\overrightarrow{FP}}{FP} - \frac{\overrightarrow{OP}}{OP} \quad \text{et } \vec{n}_p \text{ colinéaire à } \frac{\overrightarrow{IP}}{IP} - \frac{\overrightarrow{XP}}{xp}$$

c'est-à-dire OX imagé en FI en P

$$\Rightarrow \det\left[\frac{\overrightarrow{FP}}{FP} - \frac{\overrightarrow{OP}}{OP}, \ \frac{\overrightarrow{IP}}{IP} - \frac{\overrightarrow{XP}}{XP}\right] = 0$$

(équation en $y_p$)

Le support d'un rayon issu de O atteignant le réflecteur 5 en P passe par le point F après réflexion, et le support d'un rayon issu de X atteignant le réflecteur 5 en P passe par le point I après réflexion.

Tous les supports de rayons issus de O atteignant le réflecteur 5 en un point quelconque M, comme illustré sur Fig.3, passent par le point F après réflexion.

Le réflecteur 5 est dans cet exemple un cylindre d'axe horizontal, à génératrices horizontales orthogonales à l'axe optique y-y. Le réflecteur 5 admet comme section droite la trace (calculée ci-dessus) dans le plan vertical de Fig.3 du réflecteur stigmatique entre O et F. On étudie maintenant le comportement du réflecteur 5 cylindrique au voisinage du point P dans un plan horizontal : on calcule l'image F2 du point O de l'émetteur 4 dans un tel plan horizontal, en considérant un réflecteur plan passant par P et de même normale que le miroir réel (la normale en P est déterminée par la construction illustrée sur Fig.4, dans un plan vertical, et l'image est obtenue par symétrie, s'agissant d'un hypothétique miroir plan).

$$\beta = \alpha$$

$$-\frac{h}{y_P} = \text{tg}(2\alpha)$$

$$-\frac{h}{y_{F2}} = \text{tg}\,\beta \qquad \text{d'où } y_{F2}$$

$$\text{si } y_p > 0, \ \frac{h}{y_p} = \text{tg} (\pi - 2\alpha)$$

On construit alors la lentille réelle 3 de sortie de façon à ce qu'elle soit stigmatique :

- entre F et l'infini en coupe verticale (Fig.3) : un rayon lumineux semblant provenir de F sort de la lentille parallèlement à l'axe optique de la lentille y -y ;
- et entre F2 et l'infini en coupe horizontale (Fig.5) : un rayon lumineux dans le plan horizontal semblant provenir de F2 sort parallèlement à cet axe optique y - y.

Selon un exemple non limitatif, on calcule d'abord une lentille stigmatique plan convexe (de révolution) de focale F avec une face d'entrée plane orthogonale à son axe optique y-y, et une face de sortie 3a convexe de révolution.

Puis on calcule la coupe horizontale souhaitée 3b (Fig.5), la face de sortie 3a étant imposée par le résultat précédent. Comme illustré sur Fig.5, dans la coupe horizontale passant par l'axe optique y-y de la lentille 3, des rayons lumineux semblant provenir du point F2 sortent de la lentille réelle 3 parallèlement à l'axe y-y, puisque la lentille 3 est stigmatique entre F2 et l'infini en coupe horizontale.

La face d'entrée réelle 3b de la lentille est alors un cylindre d'axe vertical ayant la section droite calculée précédemment. Une coupe verticale partielle passant par l'axe y-y est illustrée sur Fig.6a ; la section de la face cylindrique 3b est une génératrice verticale.

Le résultat dépendant de l'épaisseur au centre $e_p$ (Fig.6a), on élimine cette grandeur arbitraire en fixant l'épaisseur au bord (qui est imposée par des considérations pratiques de réalisation de la pièce).

On désigne par n l'indice de réfraction de la matière de la lentille ; par i (Fig.6a) l'angle d'incidence d'un rayon lumineux provenant de F sur la face d'entrée 3b ; par r l'angle de réfraction dans la matière de la lentille 3 ; et par λ la longueur du parcours du rayon réfracté dans la matière de la lentille, jusqu'à ce qu'il sorte parallèle à l'axe y-y. L'ordonnée du point C d'incidence du rayon sur la face 3b est désignée par $z_c$. On peut alors écrire les relations qui suivent.

$$n \ \sin r = \sin i = \frac{z_c}{\sqrt{f^2 + z_c^2}}$$

$$\Rightarrow \cos r = \sqrt{1 - \frac{z_c^2}{n^2 (f^2 + z_c^2)}}$$

La lentille étant stigmatique entre F et l'infini, les surfaces d'onde correspondant à des rayons issus de F et émergeant de la lentille sont en fait des plans orthogonaux à l'axe optique y-y. On considère plus particulièrement l'un de ces plans d'onde (S).

Le chemin optique étant constant le long de tout rayon issu de F et atteignant (S) :

$$\sqrt{f^2 + z_c^2} + n\lambda + (e_p - \lambda \cos r) = f + ne_p$$

$Q_v$ est le point de sortie de la lentille, pour le rayon considéré.

(lentille stigmatique plan convexe) $\qquad Q_v = \begin{bmatrix} \rho + \lambda \cos r \\ h + z_c + \lambda \sin r \end{bmatrix}$

Dans un plan vertical, le rayon émergeant de la lentille en $Q_v$ et parallèle à l'axe y-y est donc éloigné de cet axe d'une distance (h + $z_c$ + λ sin r ).

La face d'entrée calculée dans le plan précédent, est courbe dans un plan horizontal, comme illustrée sur Fig.6b, avec un point F2 occupant une position différente de celle de Fig.5, pour des paramètres différents.

Dans un plan horizontal, on considère de la même façon un rayon parallèle à l'axe y-y et éloigné de cet axe de la même distance ($h + z_c + \lambda \sin r$) que précédemment sur Fig.6a . Soit $Q_h$ le point situé sur la face de sortie de la lentille pris le long de ce rayon et E le point d'entrée correspondant. On désigne par $\mu$ la longueur du parcours du rayon réfracté dans la matière de la lentille entre E et $Q_n$, jusqu'à ce qu'il sorte parallèle à l'axe y-y. Par ailleurs, l'angle de réfraction dans la matière au point $Q_h$ est le même que pour $Q_v$, soit r.

$$E = Q_h - \mu \begin{bmatrix} \cos r \\ \sin r \end{bmatrix}$$

La lentille étant stigmatique entre F2 et l'infini, le chemin optique est constant le long de tout rayon issu de F2 et atteignant le plan d'onde (S) :

$$(e_p - \lambda \cos r) + n\,\mu + F_2\,E = \rho - y_{F2} + n\,e_p$$

$$F_2\,E^2 = \underbrace{((\rho - y_{F2} + (n-1)\,e_p + \lambda \cos r) - n\mu)^2}_{\Delta} = \Delta^2 - 2\,\Delta\,n\mu + n^2\mu^2$$

$$= F_2\,Q_h{}^2 - 2\mu\,\overrightarrow{F_2\,Q_h} \begin{bmatrix} \cos r \\ \sin r \end{bmatrix} + \mu^2$$

C'est une équation du second degré en $\mu$.

L'épaisseur mini se trouve en un point d'ordonnée $x_E = D/2$ ; si cette épaisseur mini est fixée, l'équation devient une équation en $e_p$.

Restent à déterminer les grandeurs intermédiaires f et G.

On fixe les tailles angulaires verticale $\gamma$ (Fig.3) et horizontale $\eta$ (Fig.5) désirées pour la projection :

$$\gamma = \arctan\left(\frac{L_s\,G}{f}\right) \quad (*) \qquad\qquad \text{avec } G= \text{pseudo grandissement}$$

$$\eta = \arctan\left(\frac{h_s}{\rho - y_{F_2}}\right)$$

où $h_s$ est le côté de l'émetteur lumineux suivant un axe perpendiculaire à l'axe optique du système

$$\frac{\tan(\gamma)}{\tan(\eta)} = \frac{L_s}{h_s} \cdot \frac{G(\rho - y_{F_2})}{f}$$

où le second terme (fixé par le choix de $\gamma$ et $\eta$ et pouvant donc être considéré comme un paramètre de conception) est la déformation verticale $\delta$ réalisée par le système optique.

Or $y_{F2}$ est une fonction de $y_p$ qui ne dépend lui même que de G, de f et des paramètres de conception : il est donc possible d'établir (numériquement) une fonction $G(f)$.

L'équation (*) ci-dessus est alors une équation en f résolue numériquement.

Finalement les paramètres de conception sont h, p, D, $\gamma$ et $\eta$. $L_s$ et $h_s$ sont fixés à travers le choix de l'émetteur ou source 4 et n (indice de réfraction) est fixé à travers le choix du matériau de la lentille 3.

*Exemple de réalisation d'un système optique.*

On souhaite obtenir une bande éclairée W ( Fig.7) de largeur angulaire η = 1 degré. Le système S1 correspondant (Fig.9) inclut un émetteur rectangulaire 4.1 de type 'LED multichip' (multi puces) de dimensions approximatives 5mm x 1mm, et a été dimensionné pour une lentille 3.1 ayant une surface apparente de diamètre 40mm.

Il est à noter qu'un cache 8.1 de lumière directe visant à bloquer les rayons émis par la source et dirigés vers la lentille de sortie sans impacter le miroir intermédiaire est avantageusement prévu.

Par ailleurs, il peut également être souhaitable d'utiliser un cache additionnel en sortie de la LED (que l'on pourrait imaginer intégré au cache 8.1 indispensable de lumière directe) dans les cas où trop de rayons parasites (provenant des éléments non émissifs situés autour des puces et non pas directement de l'émetteur rectangulaire lui-même) viendraient altérer la netteté des bords latéraux des bandes éclairées en produisant un halo diffus autour de celles-ci.

En se reportant à Fig.1 des dessins, on peut voir une bande lumineuse verticale constituée par une image obtenue avec un système classique de projection imageant, à partir d'une source lumineuse constituée d'un émetteur rectangulaire formé par une LED (diode électroluminescente) comportant une rangée de cinq puces de forme carrée alignées. L'image représentée sur la figure 1, est par exemple la projection du faisceau d'éclairage élémentaire formé par un ensemble émetteur lumineux-réflecteur-lentille sur un écran placé orthogonalement à cet ensemble. Les dimensions des puces peuvent être de 1mmx1mm. L'image des puces est alignée verticalement selon un axe vertical V. Les séparations existant entre les puces se retrouvent dans l'image sous forme de zones 1 moins éclairées, séparant les images des différentes puces. Un maximum d'intensité se situe au niveau d'une zone 2, sensiblement ponctuelle, pour chaque image d'une puce. La représentation de la LED à cinq puces est semblable à celle de Fig.1 avec les zones de séparation n'émettant pas de lumière correspondant aux zones 1. Sur le diagramme de Fig.2 donnant l'énergie lumineuse portée en ordonnée (E) en fonction de la hauteur d'un point dans l'image, portée en abscisse (V), on retrouve des creux d'énergie 1 a correspondant aux séparations 1 et des pics 2a correspondant aux maxima 2.

En revanche, la Fig.7 illustre la bande lumineuse verticale obtenue avec un ensemble miroir-lentille-émetteur S1 selon l'invention, et Fig.8 illustre la répartition dans la bande de l'énergie lumineuse portée en ordonnée E, suivant la direction verticale portée en abscisse V et croissant de la droite vers la gauche. Les séparations entre les différentes puces ont disparu de la bande. Les bords verticaux de la bande W sont nets. La bande lumineuse se répartie entre une hauteur Va.1 et Vb.1. Le bord inférieur est également net. La zone maximale d'énergie $E_{max}$, traduite par le pic 2.a.1 sur Fig.8, est située en partie basse de la bande lumineuse.

Comme illustré sur Fig.9, un module comprend au moins un deuxième ensemble avec émetteur rectangulaire 4.2, miroir 5.2 et lentille 3.2 associés, ainsi qu'un cache de lumière directe 8.2. Pour éviter une interférence entre les émetteurs voisins, une cloison opaque 9 est prévue, par exemple dans un plan vertical, entre deux ensembles voisins d'un même module. Les bandes lumineuses issues de chaque émetteur 4.1, 4.2 sont juxtaposées.

Un ensemble N d'un module de l'invention permet à la fois de positionner le maximum d'intensité $E_{max}$ dans le bas de la bande lumineuse W et de faire décroître progressivement l'intensité à mesure que l'on s'éloigne, en montant de la 'coupure inférieure' du faisceau (déplacement de droite à gauche sur Fig.8 de $E_{max}$ vers Vb.1).

Cette caractéristique du système tel que décrit dans l'invention, privilégie l'ajout de 'volume' au faisceau de base (faisceau code par exemple) sans en augmenter l'épaisseur de façon significative, ce qui est souhaitable pour un faisceau route.

On obtient de la même façon d'autres bandes éclairées W2.1, W2.2, W3.1, W3.2, W4.1, W4.2 (Fig.10a) en modifiant les paramètres de conception des ensembles (notamment les focales). Une répartition de type faisceau route étant visée dans cette application, la hauteur des images lumineuses (ou bandes) successives décroît de préférence graduellement et d'autant plus que celles-ci sont éloignées de l'axe véhicule. En pratique, la hauteur angulaire de la bande la plus centrale est ajustée de sorte que le niveau 8 lux (en sortie du projecteur) soit situé verticalement à une hauteur angulaire minimum d'environ 6 degrés, préconisation habituelle visant à satisfaire les spécifications des constructeurs automobiles en matière de 'volume' souhaité pour le faisceau route. Les bandes adjacentes auront ainsi des hauteurs réduites, tandis que leurs largeurs seront égales ou supérieures aux largeurs des bandes les plus centrales. Il est donc possible, grâce à la netteté des bords verticaux, de juxtaposer des bandes lumineuses successives obtenues selon l'invention et ayant par exemple pour largeur minimum 1 degré pour les images les plus centrales, comme proposé sur Fig.7.

S'il est aisé selon la méthode de calcul décrite dans l'invention d'obtenir des bandes lumineuses bien plus étroites que 1 degré de large, ce choix d'augmenter la résolution du système d'éclairage sélectif n'est cependant pas toujours souhaitable en pratique : pour produire une largeur globale de faisceau équivalente à celle d'un faisceau route habituel, il faudrait en effet utiliser un très grand nombre de sous-systèmes (et donc de sources). Le coût de la fonction en serait sensiblement augmenté, sans parler d'inévitables difficultés d'intégration dans le volume de projecteur effectivement disponible pour une telle fonction. Si on prend en compte ces deux contraintes, par exemple pour diminuer le coût de fabrication du dispositif, en pratique on ajuste les largeurs individuelles des bandes lumineuses successives et le nombre total de bandes de façon à couvrir une plage horizontale de largeur angulaire au minimum égale à environ ±10deg pour le niveau 8 lux, à nouveau selon les spécifications habituelles en matière de 'volume' souhaité pour le faisceau route.

Les ensembles ou systèmes optiques S1...S4 représentés sur Fig.10b sont ceux utilisés pour générer les faisceaux de Fig.10a. Ces ensembles optiques font partie d'un même module d'éclairage; les cloisons de séparation, telles que 9 (Fig.9), entre les ensembles émetteur lumineux-réflecteur-lentille n'ont pas été représentées pour simplifier sur Fig.10b. L'ensemble S1 pour le faisceau central (ouverture de 1 degré) correspond à la bande W sur Fig.10a. Les ensembles S2, avec lentille 3.2, miroir 5.2 et émetteur lumineux 4.2 identique à 4.1, correspondent aux faisceaux W2.1 et W2.2 encadrant le faisceau central. Les ensembles S4 les plus au bord (ouverture de 2 degrés) correspondent aux bandes W4.1, W4.2.

Deux ensembles ou systèmes conçus selon l'invention utilisant les mêmes émetteurs comme sources lumineuses mais produisant des faisceaux de largeurs sensiblement différentes auront logiquement des dimensions sensiblement différentes elles aussi, notamment pour les paramètres h et ρ. Si la contrainte de conserver les sources lumineuses toutes identiques sur un même plan est ajoutée, les positionnements relatifs des sous-systèmes suivant l'axe vertical et suivant l'axe du véhicule, parallèle à y-y (en profondeur dans le projecteur donc) sont imposés, ce qui est possible mais offre peu de flexibilité pour le style du projecteur. Un compromis serait d'utiliser au moins deux types de sources et de former des groupes de sous-systèmes réalisés selon l'invention pouvant avoir leurs LEDs coplanaires tout en permettant une flexibilité suffisante d'agencement au sein du projecteur.

Selon une variante de réalisation, illustrée en figure 3bis, le miroir 5 associé à un émetteur lumineux 4 a une portion inférieure ondulée, qui est représentée en dessous du point P sur la figure 3bis. L'ondulation a une amplitude inférieure à 1 millimètre et une période au moins supérieure à 10 fois cette amplitude, la hauteur de la portion ondulée étant d'au plus 25 pour cent de la hauteur totale de ce miroir 3. L'amplitude correspond à l'écart Δ maximum à la surface lisse de référence.

Dans l'exemple illustré en figure 3bis, la période de modulation est de 2 millimètres et l'écart Δ maximum à la surface lisse de référence est de 0.03 millimètres. L'amplitude de la modulation évolue ici comme une sinusoïde atténuée, de la forme:

$$A.\exp(-k.z).\sin(z/L)$$

Où z est l'altitude sur le miroir ( variable)
A,k et L sont des constantes ( paramètres de modulation)

Sur la figure 3bis, par souci de clarté de la représentation, les écarts δ à la surface lisse de référence ont été augmentés d'un facteur d'environ 150, afin de les rendre visibles sur la figure. Les autres éléments restent inchangés par rapport à la figure 3, leur description ne sera donc pas reprise ici.

Cette ondulation sur le miroir permet de moduler la bande lumineuse. Cette modulation est représentée en figures 7bis et 8bis. La Fig.7bis illustre la bande lumineuse W' verticale obtenue avec un ensemble miroir-lentille-émetteur S1 avec un miroir à portion ondulée, tel qu'illustré en Fig.3bis. La Fig. 8bis illustre la répartition dans la bande de l'énergie lumineuse portée en ordonnée E, suivant la direction verticale portée en abscisse V et croissant de la droite vers la gauche. Pour permettre la comparaison avec les Fig. 7 et Fig. 8, illustrant respectivement la bande lumineuse verticale et la répartition dans la bande de l'énergie lumineuse pour le mode de réalisation sans portion ondulé, certains repères de ces figures ont été reportés en figures 7bis et 8bis. La bande lumineuse W' présente une zone lumineuse concentrée représentée par les courbes isolux en trait plein et autour, une zone diffusée en pointillé.

Comme on peut l'observer l'intensité et le positionnement du maximum E'$_{max}$ dans la bande lumineuse sont peu affectés par cette ondulation. On remarque que le pic 2b.1 en figure 8 a été légèrement décalé vers le haut et que son intensité a légèrement diminuée, par rapport au positionnement 2a.1 du pic d'intensité d'un miroir sans ondulation.

D'une manière générale, lorsque le miroir a une portion ondulée, la baisse de l'intensité du point d'intensité maximale E'$_{max}$ dans la bande lumineuse W' est de moins de 10% et de préférence moins de 5%. De même, le décalage de la position de ce point E'$_{max}$ est de moins de 1 degrés, de préférence moins de 0.5 degrés.

De même, la hauteur basse Va',1 de la bande lumineuse W' a été légèrement décalée vers le bas, comparé à la hauteur basse Va.1 de la bande lumineuse W, illustrée en Fig.3. Ainsi, le bord inférieur de la bande lumineuse W' reste relativement net. La baisse de netteté est utilisée avantageusement lorsque les bandes lumineuses complètent un faisceau code pour former un faisceau route. De même, la bande lumineuse n'est pas diffusée en largeur. Les bords verticaux de la bande lumineuse restent donc nets.

En revanche, la hauteur haute Vb'.1 de la bande lumineuse W' est largement diffusée vers le haut, comparé à la hauteur haute Vb.1 de la bande lumineuse W, illustrée en Fig.3. Ceci permet d'avoir une atténuation plus progressive de la bande lumineuse vers le haut, adoucissant ainsi le bord supérieur. Ainsi quand un ensemble de bandes lumineuses est superposé à un faisceau code, le faisceau route résultant s'approche davantage d'un faisceau route classique avec lampe à décharge.

Ceci est dû au fait qu'en étant située sur la portion inférieure, l'ondulation du miroir permet d'étaler les grandes images, qui sont générées par la partie du miroir la plus proche de la source. La portion non ondulée, située au-dessus de la portion ondulée, génère les images plus petites, plus concentrées autour du maximum d'intensité lumineuse. Ces images plus petites ne sont pas diffusées. Ainsi le positionnement et l'intensité du maximum de la bande lumineuse est très peu affecté.

Fig. 11 est une vue schématique de face d'un projecteur droit 6, selon l'invention, comportant un élément de base 7 constitué par un système optique donnant un faisceau principal à coupure, par exemple un projecteur code, et du côté intérieur vers l'axe longitudinal du véhicule, un module d'éclairage Mo comprenant une pluralité d'ensembles N miroir-lentille-émetteur propres à donner des bandes verticales semblables à celles de Fig.9. La majeure partie de chaque bande est située au-dessus de la ligne de coupure du faisceau principal pour donner un faisceau route sélectif. Un moyen d'extinction automatique des bandes pouvant être gênantes pour un autre conducteur est en outre prévu, mais non représenté.

Fig.12 illustre schématiquement l'éclairement d'un écran vertical par un projecteur gauche de véhicule selon l'invention. Ce projecteur comprend un système de base donnant un faisceau à ligne de coupure 10 horizontale, et un module à douze ensembles miroir-lentille-émetteur selon l'invention répartis également (six-six) de part et d'autre du plan vertical passant par l'axe optique (graduation 0°) du projecteur, parallèle à l'axe longitudinal du véhicule.

Les bandes lumineuses produites par chaque ensemble miroir-lentille-émetteur sont représentées schématiquement par des rectangles dont le bord inférieur est légèrement au-dessous de la ligne de coupure 10 (de l'ordre de 1 ou 2 degrés en hauteur au-dessous). Les bandes centrales W1.1 et W1.2 situées de part et d'autre de la verticale 0° présentent la hauteur maximale pour une largeur angulaire de 1 degré. Les bandes suivantes W2.1 et W2.2 sont moins hautes, pour une même largeur de 1 degré. Les bandes W3.1 et W3.2 sont moins hautes que les précédentes, avec une largeur angulaire de 2 degrés. Les bandes W4.1 et W4.2 sont moins hautes que les précédentes, avec une largeur de 3 degrés. Les bandes W5.1 et W5.2 sont encore moins hautes avec une largeur de 4 degrés.

Les limites verticales de largeur 10° et -10° dans le faisceau, correspondant à un éclairement minimum de 8 lux par exemple, sont situées dans les bandes W5.1 et W5.2, vers leur extrémité éloignée de l'axe 0°. Enfin les dernières bandes W6.1 et W6.2 ont une largeur supérieure à 4 degrés, et une hauteur plus faible.

Pour comparaison, les courbes isolux d'un faisceau route classique ont en outre été schématisées sur Fig.12, en superposition de l'ensemble de bandes lumineuses décrit précédemment, faisant apparaître un maximum d'éclairement dans la zone d'intersection de la ligne de coupure 10 et de l'axe vertical 0°.

L'invention permet d'obtenir un faisceau réglable en rapport d'aspect, à trois bords nets et avec un maximum situé vers le bas de la bande. Le faisceau est plus proche de la forme optimale et permet d'utiliser un ou éventuellement deux types de LEDs seulement, tout en minimisant le nombre de sources nécessaires. Le repliement des rayons lumineux, assuré par le miroir 5, permet d'optimiser l'encombrement du système, notamment en association avec un système d'imagerie classique pour les bandes lumineuses Wn, également appelées « pixels », pour lesquelles il conviendrait.

**Revendications**

1.  Module d'éclairage pour projecteur de véhicule automobile, comportant au moins deux émetteurs lumineux, et un système optique pour former un faisceau où

    - les émetteurs lumineux sont espacés, et sensiblement rectangulaires
    - le système optique comporte plusieurs lentilles disposées de manière à ce que chaque émetteur lumineux (4) soit associé à au moins une lentille (3) différente,
    - un miroir (5) est disposé en arrière de chaque lentille pour renvoyer les rayons lumineux provenant de l'émetteur associé vers la lentille (3), et **caractérisé en ce que** :
    - les lentilles (3) et les miroirs (5) sont calculés pour produire avec chaque émetteur lumineux (4) associé une bande lumineuse (W) à bords verticaux nets, de hauteur et de largeur déterminées.

2.  Module d'éclairage selon la revendication 1, **caractérisé en ce que** chaque émetteur lumineux (4) est décalé transversalement (h) par rapport à l'axe optique (y-y) de la lentille (3) associée.

3.  Module d'éclairage selon la revendication 1 ou 2, ladite bande lumineuse (W) présente un éclairement homogène entre les bords verticaux.

**4.** Module d'éclairage selon l'une quelconque des revendications 1 à 3, et pour que le maximum d'intensité lumineuse de ladite bande lumineuse (W) est décentré par rapport à l'ensemble de ladite bande lumineuse.

**5.** Module d'éclairage selon l'une quelconque des revendications 1 à 4, **caractérisé en ce que** les lentilles (3) et les miroirs (5) sont calculés pour donner un troisième bord net, à savoir le bord inférieur horizontal de chaque bande, tandis que le bord supérieur est flou.

**6.** Module d'éclairage selon l'une quelconque des revendications précédentes, **caractérisé en ce qu'**il produit un faisceau dans lequel les bords verticaux de bandes provenant d'émetteurs lumineux voisins sont juxtaposés.

**7.** Module d'éclairage selon l'une quelconque des revendications précédentes, **caractérisé en ce qu'**une cloison opaque (9) est prévue entre deux ensembles adjacents de miroir, lentille et émetteur lumineux.

**8.** Module d'éclairage selon l'une quelconque des revendications précédentes, **caractérisé en ce que** l'émetteur lumineux est un élément semi-conducteur d'une diode électroluminescente.

**9.** Module d'éclairage selon la revendication 8, **caractérisé en ce que** l'émetteur lumineux est formée par une matrice de plusieurs puces alignées suivant au moins une direction, les puces voisines étant séparées par des zones n'émettant pas de lumière.

**10.** Module d'éclairage selon l'une quelconque des revendications précédentes, **caractérisé en ce que** le miroir (5) est cylindrique avec des génératrices orthogonales à l'axe optique (y-y) de la lentille (3) associée et généralement horizontales.

**11.** Module d'éclairage selon la revendication 10, **caractérisé en ce que** le miroir (5), dans un plan vertical passant par l'axe optique (y-y) de la lentille (3) associée, est stigmatique entre l'extrémité avant (O) de l'émetteur lumineux (4) associé et un premier point (F) de cet axe optique (y-y), tandis que dans un plan horizontal passant par cet axe optique (y-y), le miroir (5) est stigmatique entre l'extrémité avant (O) de l'émetteur lumineux associé et un deuxième point (F2) de cet axe optique (y-y).

**12.** Module d'éclairage selon la revendication 10 ou 11, **caractérisé en ce que** le miroir (5) est calculé pour transformer le bord arrière de l'émetteur lumineux (4) en le bord (I) éloigné de l'axe optique (y-y) de l'image de l'émetteur par le miroir, ce bord éloigné étant le bord supérieur flou, l'axe optique étant celui de la lentille associée.

**13.** Module d'éclairage selon la revendication 12, **caractérisé en ce que** le miroir a une portion inférieure ondulée, l'ondulation ayant une amplitude inférieure à 1 millimètre et une période au moins supérieure à 10 fois cette amplitude, la hauteur de la portion ondulée étant d'au plus 25 pour cent de la hauteur totale de ce miroir (3).

**14.** Module d'éclairage selon l'une quelconque des revendications 9 à 13, **caractérisé en ce que** la lentille associée (3) présente une face de sortie (3a) convexe de révolution et une face d'entrée (3b) cylindrique à génératrices verticales.

**15.** Projecteur route à faisceau sélectif, **caractérisé en ce qu'**il comprend un système optique principal à faisceau à ligne de coupure (10), et au moins un module selon l'une quelconque des revendications précédentes produisant des bandes verticales (W1.1, W1.2,...W6.1, W6.2) juxtaposées au-dessus de la ligne de coupure (10) pour former un faisceau route.

**Patentansprüche**

**1.** Beleuchtungseinheit für Kraftfahrzeugscheinwerfer, mit wenigstens zwei Strahlungsquellen und einem Optiksystem zum Bilden eines Lichtbündels, bei der

- die Strahlungsquellen voneinander beabstandet und im Wesentlichen rechteckig sind,
- das Optiksystem mehrere Linsen umfasst, die solchermaßen angeordnet sind, dass jede Strahlungsquelle (4) wenigstens einer unterschiedlichen Linse (3) zugeordnet ist,
- ein Spiegel (5) hinter jeder Linse angeordnet ist, um die von der zugeordneten Strahlungsquelle stammenden Lichtstrahlen zu der Linse (3) zu reflektieren, und **dadurch gekennzeichnet, dass**

- die Linsen (3) und die Spiegel (5) so berechnet sind, dass mit jeder zugeordneten Strahlungsquelle (4) ein Lichtstreifen (W) mit scharfen senkrechten Rändern und einer bestimmten Höhe und Breite erzeugt wird.

2.  Beleuchtungseinheit nach Anspruch 1,
    **dadurch gekennzeichnet, dass** jede Strahlungsquelle (4) bezüglich der optischen Achse (y-y) der zugeordneten Linse (3) in Querrichtung (h) versetzt ist.

3.  Beleuchtungseinheit nach Anspruch 1 oder 2,
    bei der der Lichtstreifen (W) zwischen den senkrechten Rändern eine homogene Lichtstärke aufweist.

4.  Beleuchtungseinheit nach einem der Ansprüche 1 bis 3,
    bei der das Maximum der Lichtstärke des Lichtstreifens (W) in Bezug auf den gesamten Lichtstreifen dezentriert ist.

5.  Beleuchtungseinheit nach einem der Ansprüche 1 bis 4,
    **dadurch gekennzeichnet, dass** die Linsen (3) und die Spiegel (5) so berechnet sind, dass ein dritter scharfer Rand entsteht, nämlich der waagerechte untere Rand eines jeden Lichtstreifens, wohingegen der obere Rand unscharf ist.

6.  Beleuchtungseinheit nach einem der vorhergehenden Ansprüche,
    **dadurch gekennzeichnet, dass** sie ein Lichtbündel erzeugt, bei dem die senkrechten Ränder von Lichtstreifen, die von benachbarten Strahlungsquellen stammen, nebeneinanderliegen.

7.  Beleuchtungseinheit nach einem der vorhergehenden Ansprüche,
    **dadurch gekennzeichnet, dass** eine lichtundurchlässige Wand (9) zwischen zwei nebeneinanderliegenden, aus Spiegeln, Linsen und Strahlungsquellen bestehenden Einheiten vorgesehen ist.

8.  Beleuchtungseinheit nach einem der vorhergehenden Ansprüche,
    **dadurch gekennzeichnet, dass** die Strahlungsquelle ein Halbleiterelement einer Leuchtdiode ist.

9.  Beleuchtungseinheit nach Anspruch 8,
    **dadurch gekennzeichnet, dass** die Strahlungsquelle aus einer Matrix mit mehreren, in wenigstens einer Richtung fluchtend angeordneten Chips gebildet ist, wobei benachbarte Chips durch Bereiche getrennt sind, die kein Licht emittieren.

10. Beleuchtungseinheit nach einem der vorhergehenden Ansprüche,
    **dadurch gekennzeichnet, dass** der Spiegel (5) zylindrisch ist mit zur optischen Achse (y-y) der zugeordneten Linse (3) orthogonalen und allgemein horizontalen Erzeugenden.

11. Beleuchtungseinheit nach Anspruch 10,
    **dadurch gekennzeichnet, dass** der Spiegel (5) in einer durch die optische Achse (y-y) der zugeordneten Linse (3) verlaufenden vertikalen Ebene zwischen dem vorderen Ende (0) der zugeordneten Strahlungsquelle (4) und einem ersten Punkt (F) dieser optischen Achse (y-y) stigmatisch ist, wohingegen der Spiegel (5) in einer durch diese optische Achse (y-y) verlaufenden horizontalen Ebene zwischen dem vorderen Ende (0) der zugeordneten Strahlungsquelle und einem zweiten Punkt (F2) dieser optischen Achse (y-y) stigmatisch ist.

12. Beleuchtungseinheit nach Anspruch 10 oder 11,
    **dadurch gekennzeichnet, dass** der Spiegel (5) so berechnet ist, dass der hintere Rand der Strahlungsquelle (4) durch den Spiegel in den von der optischen Achse (y-y) entfernten Rand (I) der Abbildung der Strahlungsquelle verwandelt wird, wobei dieser entfernte Rand der unscharfe obere Rand ist und die optische Achse diejenige der zugeordneten Linse ist.

13. Beleuchtungseinheit nach Anspruch 12,
    **dadurch gekennzeichnet, dass** der Spiegel einen welligen unteren Teil aufweist, wobei die Welligkeit eine Amplitude von unter 1 mm und eine Periode aufweist, die wenigstens zehnmal so groß ist wie die Amplitude, wobei die Höhe des welligen Teils höchstens 25 Prozent der Gesamthöhe des Spiegels (5) beträgt.

14. Beleuchtungseinheit nach einem der Ansprüche 9 bis 13,
    **dadurch gekennzeichnet, dass** die zugeordnete Linse (3) eine rotationssymmetrische konvexe Austrittsfläche (3a) und eine zylindrische Eintrittsfläche (3b) mit senkrechten Erzeugenden aufweist.

15. Fernlichtscheinwerfer mit selektivem Lichtbündel,
**dadurch gekennzeichnet, dass** er ein Hauptoptiksystem mit einem Lichtbündel mit Hell-Dunkel-Grenze (10) und wenigstens eine Einheit nach einem der vorhergehenden Ansprüche umfasst, die zum Bilden eines Fernlichts nebeneinanderliegende senkrechte Lichtstreifen (W1.1, W1.2,...W6.1, W6.2) über der Hell-Dunkel-Grenze (10) erzeugt.


**Claims**

1. Lighting module for a motor vehicle headlight, comprising at least two light emitters, and an optical system in order to form a beam, wherein:

   - the light emitters are spaced, and substantially rectangular;
   - the optical system comprises a plurality of lenses which are arranged such that each light emitter (4) is associated with at least one different lens (3);
   - a mirror (5) is arranged at the rear of each lens in order to return the rays of light obtained from the associated emitter, to the lens (3); and **characterised in that**:
   - the lenses (3) and the mirrors (5) are designed to produce with each associated light emitter (4) a strip of light (W) with sharp vertical edges, with a specific height and width.

2. Lighting module according to claim 1, **characterised in that** each light emitter (4) is offset transversely (h) relative to the optical axis (y-y) of the associated lens (3).

3. Lighting module according to claim 1 or 2, wherein the said strip of light (W) has homogenous lighting between the vertical edges.

4. Lighting module according to any one of claims 1 to 3, and such that the maximum light intensity of the said strip of light (W) is off centred relative to the assembly of the said strip of light.

5. Lighting module according to any one of claims 1 to 4, **characterised in that** the lenses (3) and the mirrors (5) are designed to provide a third sharp edge, i.e. the lower horizontal edge of each strip, whereas the upper edge is not sharp.

6. Lighting module according to any one of the preceding claims, **characterised in that** it produces a beam wherein the vertical edges of strips obtained from adjacent light emitters are juxtaposed.

7. Lighting module according to any one of the preceding claims, **characterised in that** an opaque partition (9) is provided between two adjacent assemblies of mirror, lens and light emitter.

8. Lighting module according to any one of the preceding claims, **characterised in that** the light emitter is a semiconductor element of a light-emitting diode.

9. Lighting module according to claim 8, **characterised in that** the light emitter is formed by a matrix of a plurality of chips which are aligned according to at least one direction, the adjacent chips being separated by areas which do not emit light.

10. Lighting module according to any one of the preceding claims, **characterised in that** the mirror (5) is cylindrical, with generatrices which are orthogonal to the optical axis (y-y) of the associated lens (3), and generally horizontal.

11. Lighting module according to claim 10, **characterised in that** the mirror (5), on a vertical plane which passes via the optical axis (y-y) of the associated lens (3) is stigmatic between the front end (O) of the associated light emitter (4) and a first point (F) of this optical axis (y-y), whereas on a horizontal plane which passes via this optical axis (y-y), the mirror (5) is stigmatic between the front end (O) of the associated light emitter and a second point (F2) of this optical axis (y-y).

12. Lighting module according to claim 10 or 11, **characterised in that** the mirror (5) is designed to transform the rear edge of the light emitter (4) into the edge (I) which is spaced from the optical axis (y-y) of the image of the emitter by the mirror, this spaced edge being the upper edge which is not sharp, the optical axis being that of the associated lens.

**13.** Lighting module according to claim 12, **characterised in that** the mirror has an undulating lower portion, the undulation having amplitude of less than 1 mm and a period which is at least 10 times more than this amplitude, the height of the undulating portion being at the most 25% of the total height of this mirror (3).

**14.** Lighting module according to any one of claims 9 to 13, **characterised in that** the associated lens (3) has a convex output face (3a) of revolution, and a cylindrical input face (3b) with vertical generatrices.

**15.** High-beam headlight with a selective beam, **characterised in that** it comprises a main optical system with a cut-offline beam (10), and at least one module according to any one of the preceding claims producing vertical strips (W1.1, W1.2, ...W6.1, W6.2) which are juxtaposed above the cut-off line (10) in order to form a high beam.

FIG.1

FIG.2

FIG.3

FIG.4

FIG.5

FIG.6a

FIG.6b

FIG.7

FIG.8

FIG.7 bis

FIG.8 bis

FIG. 3bis

FIG.9

FIG.10a

FIG.10b

FIG.11

EP 2 278 217 B1

FIG.12

**RÉFÉRENCES CITÉES DANS LA DESCRIPTION**

**Documents brevets cités dans la description**

- EP 1487025 A
- EP 1780462 A
- EP 1881264 A